# EUROPEAN PATENT SPECIFICATION

(11) **EP 4 273 586 B1**
(45) Date of publication and mention of the grant of the patent: **26.11.2025**
(21) Application number: 22171639.2
(22) Date of filing: 04.05.2022
(51) Int. Cl.: G01T 1/04, G01T 1/02, G01T 1/29

(54) **ORIENTED TRIPLEX SENSOR AND METHOD OF IDENTIFICATION OF THE RADIATION SOURCE LOCATION AND ITS DOSIMETRY**
AUSGERICHTETER TRIPLEX-SENSOR UND VERFAHREN ZUR IDENTIFIZIERUNG DES ORTES DER STRAHLUNGSQUELLE UND IHRES DOSIMETERS
CAPTEUR TRIPLEX ORIENTÉ ET PROCÉDÉ D'IDENTIFICATION DE LA LOCALISATION D'UNE SOURCE DE RAYONNEMENT ET SON DOSIMÈTRE

(43) Date of publication of application: 08.11.2023
(73) Proprietor: Vilniaus Universitetas, 01513 Vilnius (LT)
(72) Inventor: Gaubas, Eugenijus, 01513 Vilnius (LT); Ceponis, Tomas, 01513 Vilnius (LT); Rumbauskas, Vytautas, 01513 Vilnius (LT); Deveikis, Laimonas, 01513 Vilnius (LT); Pavlov, Jevgenij, 01513 Vilnius (LT)
(74) Representative: Klimaitiene, Otilija

(56) References cited:
- EP-A1- 3 035 081
- GAUBAS E ET AL: "Study of neutron irradiated structures of ammonothermal GaN", JOURNAL OF PHYSICS D: APPLIED PHYSICS, INSTITUTE OF PHYSICS PUBLISHING, BRISTOL, GB, vol. 50, no. 13, 28 February 2017 (2017-02-28), pages 135102, XP020315104, ISSN: 0022-3727, [retrieved on 20170228], DOI: 10.1088/1361-6463/AA5C6C

## Description

### FIELD OF INVENTION

This invention relates to the identification of the high-energy electromagnetic and particle radiation source location and dosimetry of radiation cumulative action. More specifically, it discloses an oriented triplex sensor and a method for dosimetry of large areas using these sensors.

### BACKGROUND ART OF INVENTION

The combined sensors for the remote dosimetry of rather small fluence irradiations by large energy particles (photons, hadrons, leptons) are addressed to personal control of accumulated radiation dosage and are based on counting of Geiger tube pulses **(**US5132543A **patent application)** or measurements of signals, generated by the scintillator, the plurality of photoelectric conversion elements, and a substrate having a first surface opposing the scintillator and a second surface opposite from the first surface **(**CN102590850A **patent application).** The substrate, the photoelectric conversion elements, and the scintillator are arranged in this order from the side of the radiation detecting apparatus where the radiation enters, and the second surface includes a plurality of depressions arranged in orthogonal projection areas where orthogonal projections of the plurality of projected photoelectric conversion elements are positioned and projections parts of which are positioned in the orthogonal projection areas and the remaining areas other than the parts of which are positioned between the orthogonal projection areas. However, the vacuum tube or photoelectric transducer-based detectors operate as time and area-integrated apparatuses without fixing the radiation source location.

A hybrid multi-layer sensor, described in EPO patent application EP21165145.0**,** is addressed to contactless dosimetry and fluxmetry in the monitoring of the harsh radiation facilities and control of mixed particle beams in nuclear reactors, in storages of nuclear fuel waste, in large particle accelerators and neutron spallators which also is supplied by the reading apparatuses and measurement methods. It contains layers of the scintillator sensors and a photo-sensor operating in the pulse mode as well as in DC-operating mode, where the multi-layered scintillator is separated from the photo-sensor by the filter of visible electromagnetic (EM) spectrum which is made of large conductivity Silicon (Si) layer, and further, the scintillator and photo-sensor are separately scanned by at least two external apparatuses - the fiber-coupled spectrophotometer and the microwave needle-tip antenna connected to a microwave detection system,- there particle species and the particle energy discrimination is performed by correlating signals of the scintillator spectrum structure and the microwave probed photoconductivity amplitude and decay lifetime.

An inverted task is solved within the method (disclosed in RU2285236C1**)** of X-ray inspection of the thickness of layers of triplex (three-layers) metal tape used for making sleeves for cartridges, projectiles, etc. There, the inspected triplex tape is subjected to X-ray pulse radiation of the first collimated and of the second additional beam impinging in antiphase at opposite tape surfaces. The fluxes are collimated and oriented in parallel to each other along the cross-section of the tape. Detection is made by synchronous scanning of reflected radiation by angle covering the aperture of collimated direct fluxes.

Similar type detector systems are **Phoswich** ("phosphor sandwich") combined sensors or hybrid detectors of X-ray imaging. The Phoswich detectors typically are also used to detect low-intensity and low-energy gamma-rays, as well as X-rays together with alpha and beta particles in a higher-energy ambient background. Some detector designs can measure and separately identify the incident radiation energies simultaneously. The Phoswich is a combination of scintillators (for instance, three layers of scintillator material of different luminescence decay time described in scientific literature, e. g., [1]), with dissimilar pulse shape characteristics optically coupled to each other and registered by a common photomultiplier (PMT). Pulse shape or spectral analysis of the large statistical ensemble distinguishes the (PSD - pulse shape or SSD- spectral shape discriminator) signals from a sequence of the stochastic scintillation events generated by ionizing radiation within the Phoswich layers, sometimes identifying in which scintillator the event occurred. However, the rather long exposures are necessary to collect reliable ensembles of stochastic events and to separate the PSD/SSD parameters of the incident particles. On the other hand, the high sensitivity of PMTs leads to complete saturation effects of the PMT signals under a rather high-intensity scintillation due to large flux/large fluence irradiation fields, thereby rejecting the possibility to identify the incident particles and separating their (particle energy, density, etc.) parameters. The rather low energy of gamma-X-rays and particles (alpha, beta, protons, pions) can be detected using the Phoswich detectors, due to thin scintillators exploited to get an efficient excitation (within short stopping range) and luminescence light collection (to avoid the reabsorption effects), thereby the Phoswich detectors are hardly applicable for identification/separation of the penetrative (large energy) particles. The tight binding of several thin scintillators and other technological means is necessary for the fabrication of the luminescent component of the Phoswich detector to avoid the interference and secondary excitation effects within a combination of several scintillators. The Phoswich detectors are hardly applicable for the remote monitoring of large radiation-polluted areas especially when it is necessary to trace the location of the radioactive sources.

Several examples of Phoswich detectors are described in research papers [1], [2], and patent documents. The Japanese patent application JPH06123777A discloses a Phoswich detector with an optical filter for controlling peak value and rising time of output pulse from scintillators to govern the scintillator signals and to suppress the transmittance of fluorescent light emitted from the scintillator or to trap the fluorescent light.

Another Phoswich-type hybrid system for remote sensing of external dosimetry is disclosed in the US patent US7566881B2 "DIAL-Phoswich hybrid system for remote sensing of radioactive plumes in order to evaluate external dose rate", where an interactive combination of Phoswich detector array and differential absorption LIDAR is proposed to trace an unknown dose of the radioactive source.

An alternative to Phoswich detectors is the Hybrid Pixel detectors employed for dosimetry and fluxmetry of radiation. A **hybrid pixel detector** (HPD) is a type of ionizing radiation detector consisting of an array of semiconductor diodes and their associated electronics. The term "hybrid" stems from the fact that the two main elements from which these devices are built - the semiconductor sensor and the readout chip - are manufactured independently, and later electrically coupled by means of a bump-bonding process. Ionizing particles are detected as they produce electron-hole pairs through their interaction with the sensor elements, usually made either of doped silicon or cadmium telluride. The readout element is segmented into pixels containing the necessary electronics to amplify and measure the electrical signals induced by the incoming particles in the sensor layer. Hybrid pixel detectors may also operate in the single-photon mode, known as **Hybrid Photon Counting Detectors** (HPCDs). The latter detectors are designed to count the number of hits within a certain time interval. They have become a standard in most synchrotron light sources and X-ray detection applications. However, hybrid pixel detectors when operating in the dosimeter regime are rapidly damaged by irradiation, and their response should be permanently re-calibrated to get reliable results. Moreover, the HPDs are rather expensive devices, thus making the large fluence dosimetry a non-reversible and expensive procedure.

Examples of Hybrid Pixel detectors are described in research papers [3], [4]. From patents and patent applications, close to the present invention is the method and apparatus described in the US patent US738820682 *"Pulse shape discrimination method and apparatus for high-sensitivity radioisotope identification with an integrated neutron-gamma radiation detector*" where for discriminating the types of radiation, interacting with an integrated radiation detector having of a pulse-mode operating photo-sensor which is optically coupled to a gamma-ray scintillator sensor and a neutron scintillator sensor, and uses an analogue to digital converter (ADC) and a charge to digital converter (QDC) to determine scintillation decay times and classify radiation interactions by radiation type.

Another similar detector for the simultaneous recording of several types of radiations (simultaneous beta and gamma spectroscopy) is disclosed in the US patent US7683334B2**,** where three layered scintillators are used for beta and gamma detection. A pulse induced by an interaction of the radiation with the detector is analysed to classify the type of event as beta, gamma, or unknown. A pulse is classified as a beta-event if the pulse originated from just the first scintillator alone or just the first and the second scintillator. A pulse from just the third scintillator is recorded as a gamma-event.

The main drawback of the above-reviewed Phoswich and HPD sensors is that they are suitable to measure radiations of low intensities and low fluences. However, for higher flux radiation and, especially, in harsh environments (such as nuclear reactors, particle accelerators, etc.) Phoswich and HPD sensors saturate quickly, fail to operate due to impacts of high irradiation, or are unable to discriminate needed species of radiations and particles.

The high energy (HE) and luminosity of the LHC-type accelerators determine a harsh radiation background around the CMS detectors [5, 6]. Under such heavy conditions, the GEM (Gas Electron Multiplier) detectors have been identified as the most suitable sensor to operate in the high radiation environment in CMS experiments. Two types of sensors are used in it: RadFETs for total absorbed dose and p-i-n diodes for particle (proton and neutron) detection. The basic detector unit, called RADMON, contains two sensors of each type and can be installed at each GEM detector. The system has a modular structure, permitting one to increase easily the number of controlled RADMONs.

EP3035081 shows a hybrid dosimetry sensor combining two layers and respective electron paramagnetic resonance and carrier recombination or lifetime measurement readout techniques.

Remote dosimetry sensing is important for radiation safety and environmental security applications. To keep users away from hazardous areas, an unmanned aerial system can be used as a mobile sensor platform. The dual sensor [7,8] was integrated into a multicopter platform for the detection of neutrons and gamma photons. The sensor's signal communication and data fusion was programmed using Robot Operating System framework, as well as on-board signal analysis functions including the neutron-photon pulse shape discrimination and the identification of photo peaks in the gamma spectrum. These data with added real-time kinematic GPS and time stamps were reported to the user enabling real-time awareness of the monitored area, further analysis in temporal and spatial domains, and also radiation mapping and source search tasks.

### SUMMARY OF INVENTION

The invention relates to an oriented triplex hybrid dosimetry sensor according to claim 1 and to a measurement method according to claim 9.

The present oriented dosimetry sensor for the identification of the radiation source location and its dosimetry contains glued together layers of the wide-bandgap scintillator, of the Electron Paramagnetic Resonance (EPR) sensor operating through radiation-induced formation of free-radicals in organic material, e.g. alanine, and a photo-sensor operating in the DC-operating mode.

Differently from the close prior art document disclosed in the US patent US7683334B2**,** where three layered-scintillators are used for beta and gamma detection, and interaction of the radiation with the detector is classified as a beta-event if the pulse originated from just the first scintillator alone or from just the first and the second scintillator, response of the third scintillator is recorded as gamma-event, in the present oriented sensor the three-layered detector is formed using different materials, namely, the scintillator, the EPR sensitive alanine and the photo-sensor layers comprising a triplex sensor, where intermediate organic material layer acts as a blocking spectral filter preventing excitation of the scintillator as well as photo-sensor layers, and these layers are sequentially scanned by at least three external apparatuses - the fiber-coupled spectrophotometer, the EPR scanner and the microwave needle-tip antenna connected to a microwave detection system, where particle species/energy discrimination and fluence measurements are performed by correlating signals of the scintillator spectrum structure, the EPR signal amplitude and the microwave probed photo-conductivity decay lifetime, and where the scintillator, the EPR sensor and photo-sensor act as the complementary detectors of the radiation fluence while depth variations of the accumulated dose serves for estimation of the radiation streamline.

These small dimension triplex sensors can be composed into 1D cells comprising several triplex sensors deployed face-to-face and in a line, while triplex sensor structures oriented in perpendicular directions comprise 2D as well as 3D detectors, the depth scanning of which is applicable for estimation of location and dose-rate of the radiation source. The combined triplex sensor devices installed on unmanned aerial vehicles (UAV) are suitable for fast inspection of the harsh irradiated terrene surface where fast signal reading is performed on board using a scintillator layer while precise dosimetry is implemented after UAV landing, by measurements of the EPR and photo sensor signals. These sensors are applicable for contactless and fast mapping of radiation hazards in large areas. These oriented multi-layer sensors are intended for contactless dosimetry in the monitoring of wide-area harsh radiation facilities and nuclear fuel or radio-nuclide waste which also are supplied by the reading apparatuses and measurement methods.

### DESCRIPTION OF DRAWINGS

The drawings are provided as a reference to possible embodiments and are not intended to limit the scope of the invention. Neither of the drawings nor the graphs presented herein should be construed as limiting the scope of the invention, but merely as an example of a possible embodiment.

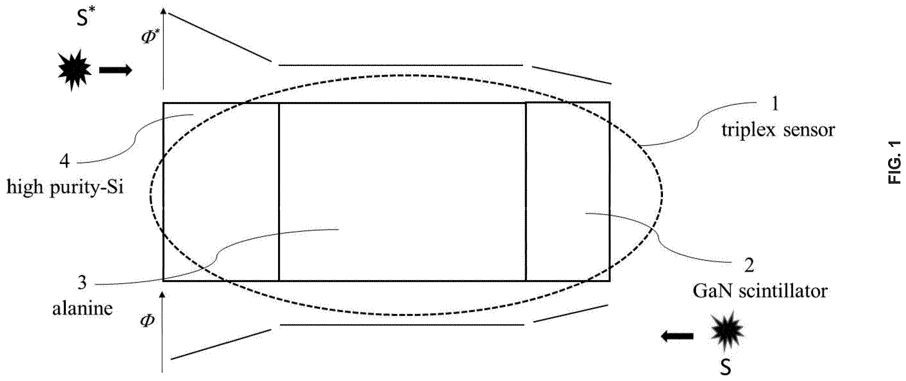

- **Fig. 1**: Oriented triplex sensor (1) as a system of composite detectors/sensors manufactured by sticking the different material pieces (layers) of appropriate thickness:
- the wideband semiconductor (2, such as GaN or diamond) acting as a scintillator,
- the organic material (3, such as alanine or sucrose) layer where free radicals emerge under high-energy irradiations; this layer is also refered as an intermediate organic material layer (3) for providing an electron paramagnetic resonance (EPR) signal averaged over the layer volume, which is made of organic material where free-radicals are formed under irradiation of high-energy particles, and concentration of radiation-induced free radicals is dependent on irradiation dose; further this second layer (3) acts also as a spectral filter preventing excitation of the scintillator layer (2) as well as the third layer (4) and
- high purity silicon (HP-Si) layer (4), also referred to as depth-scan layer (4) for scanning of the depth distribution of the parameters of carrier recombination or trapping lifetime, acting as a microwave probed photo-sensor being a substance with carrier lifetime dependent on irradiation fluence, and where the depth variations of the measured fluences depend on layer orientation relative to the irradiation source (S or S*);

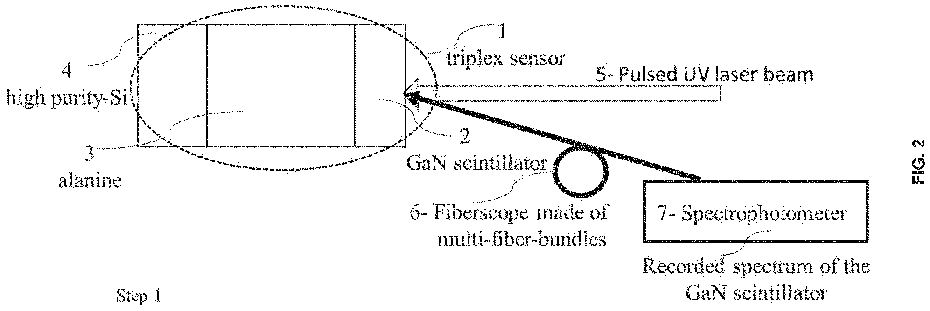

- **Fig. 2**: the process of reading the oriented dosimetry triplex sensor (1) signals is performed in a succession of three steps. Here, the first step (in the reading of the triplex sensor dosimetry data) is implemented by recording the luminescence (i.e., photo-luminescence, or PL) spectrum. This PL spectrum reader contains a UV laser (5) which excites photo-luminescence (PL within GaN layer), and PL light is collected by the multi-bundle fiberscope (6) into spectrophotometer (7), where dispersed PL spectrum is recorded.

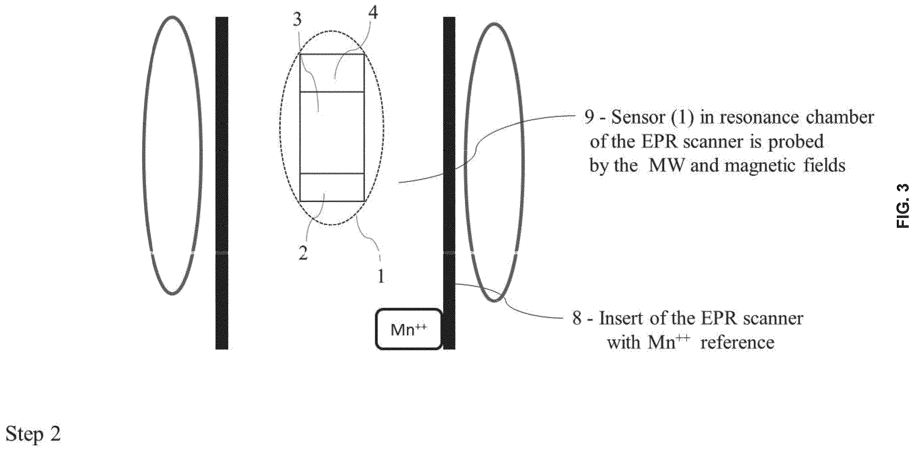

- **Fig. 3.**: The second step in reading the dosimetry data of the oriented triplex sensor is performed by EPR signal measurements. The triplex sensor (1) is mounted within the insert (8) of the EPR scanner containing Mn⁺⁺ reference. This insert of the EPR scanner with mounted sensor (1) is probed by the MW and magnetic fields within the resonance chamber (9) of the EPR scanner.

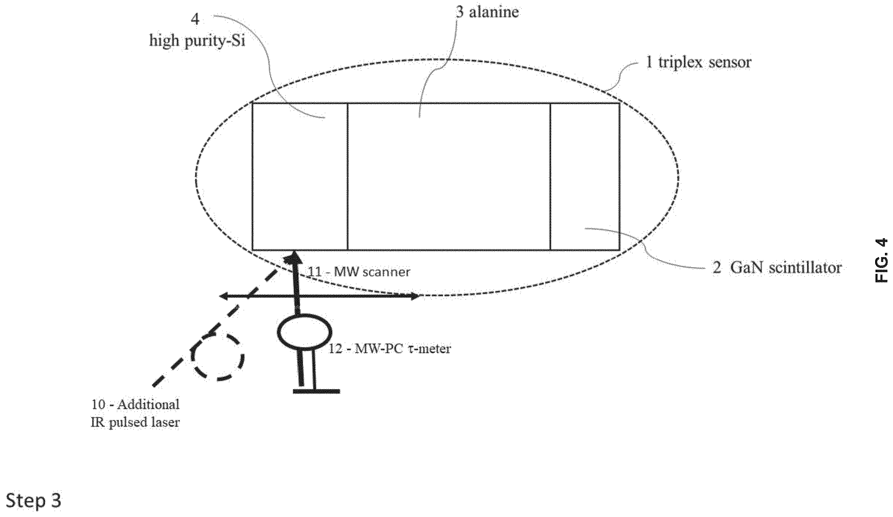

- **Fig. 4.**: As the third step, in the reading of the triplex sensor (1) dosimetry data is implemented using carrier recombination lifetime dependence on irradiation fluence. The carrier recombination lifetime is recorded within high-purity Si layer (4) by an MW-PC scanner (11) combined with an MW-PC τ-meter (12) containing an additional IR pulsed laser (10) for the excess carrier injection.

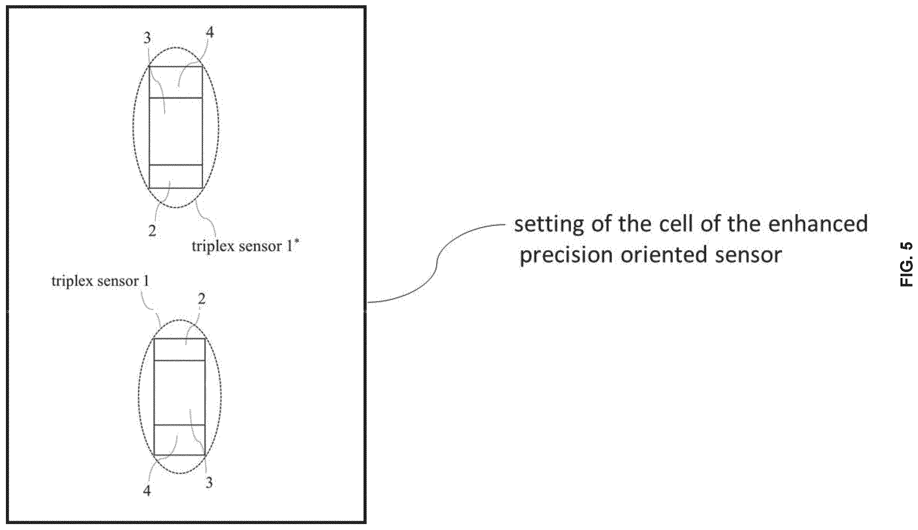

- **Fig.5.**: The 1D cell of the oriented dosimetry detector/sensor for enhanced precision is manufactured by mounting face-to-face several (at least, two) triplex sensors (1, 1*) within a special setting.

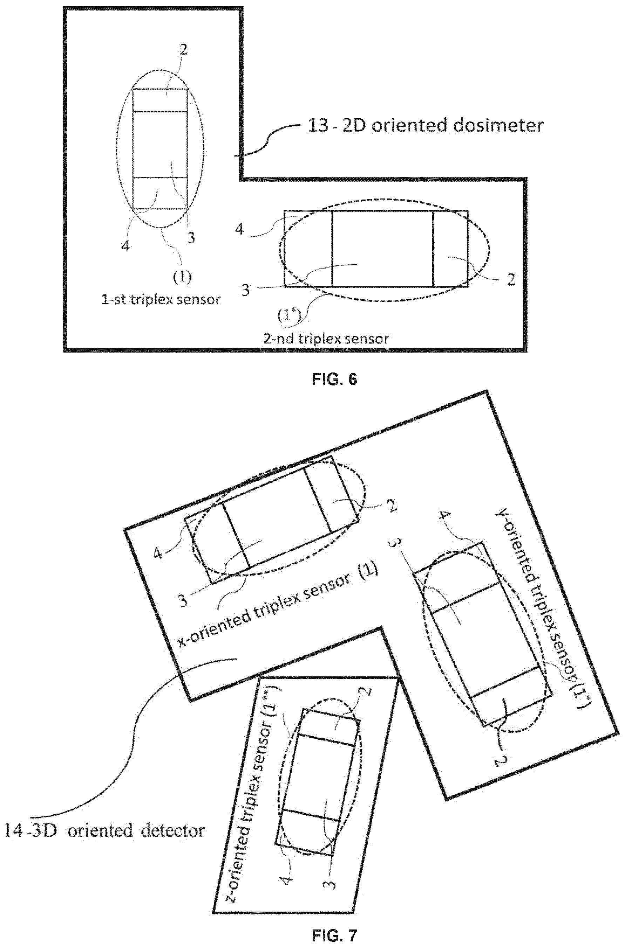

- **Fig. 6.**: The oriented 2D-detector/ sensor addressed to remote estimates of the terrene location and activity of radiation source is manufactured by mounting several (at least, two) oriented perpendicularly sensors or 1D-cells within a special cage.
- **Fig. 7.**: The oriented 3D-detector/sensor (14) addressed to remote estimates of the spatial location and activity of radiation source is manufactured by mounting several (at least, three) perpendicularly oriented sensors or 1D-cells within a special cage (14): complemented with LIDAR type distance-meter, the multi-bundle fiberscope (6), spectrophotometer (7), and digital data collection and transfer module.

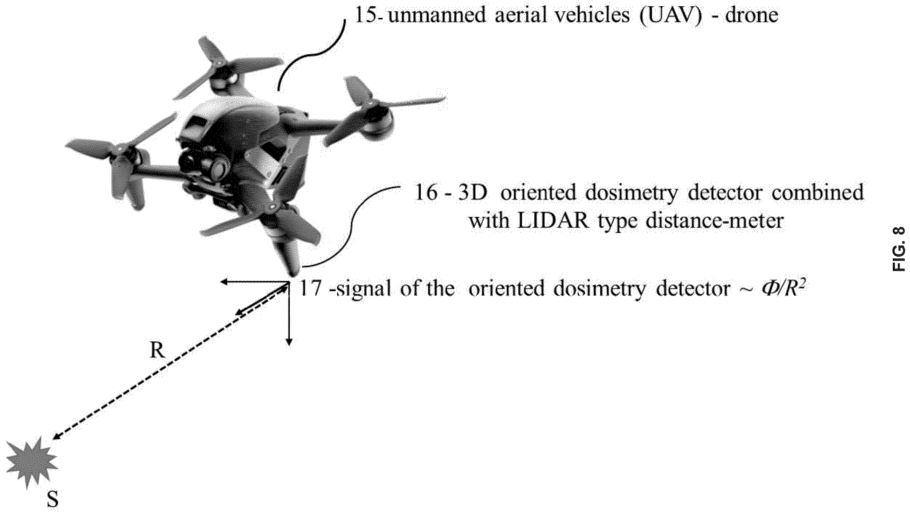

- **Fig. 8.**: The oriented dosimetry 3D-scanner can be made by mounting on a drone (15) the oriented dosimetry 3D-sensor (16) for fast and remote inspection of the harsh irradiated terrene surfaces. The fluence values are also dependent on the distance (between radiation source S and 3D-sensor) controlled by the installed LIDAR system (16).

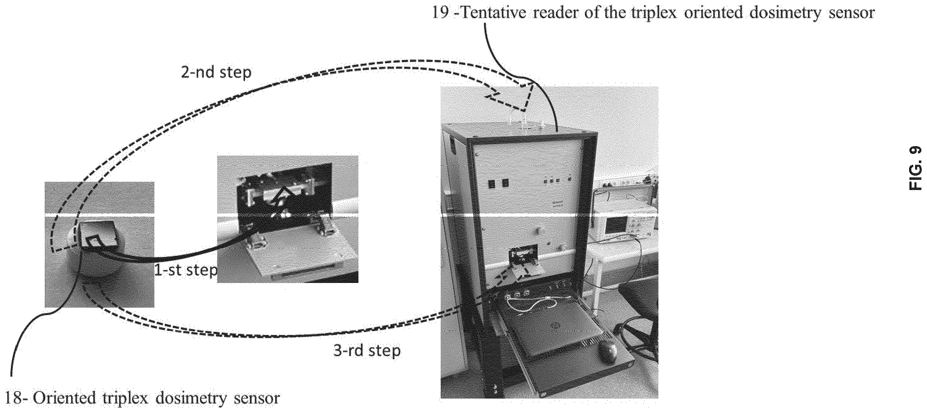

- **Fig. 9.**: The dosimetry data of the oriented sensor is measured in succession by setting the irradiated sensor (18) in PL as well as MW-PC opening, and after setting it into the EPR insert of the tentative reader (19). In the case of the oriented 3D-sensor mounted on the drone, the 1-st step of orientation (towards radiation source) evaluation is implemented by using a complementary instrumentation of a multi-bundle fiberscope (6), spectrophotometer (7), a LIDAR system, and a digital data collection and signal transfer module, while the second and the third dose-reading steps are performed after landing of the drone.

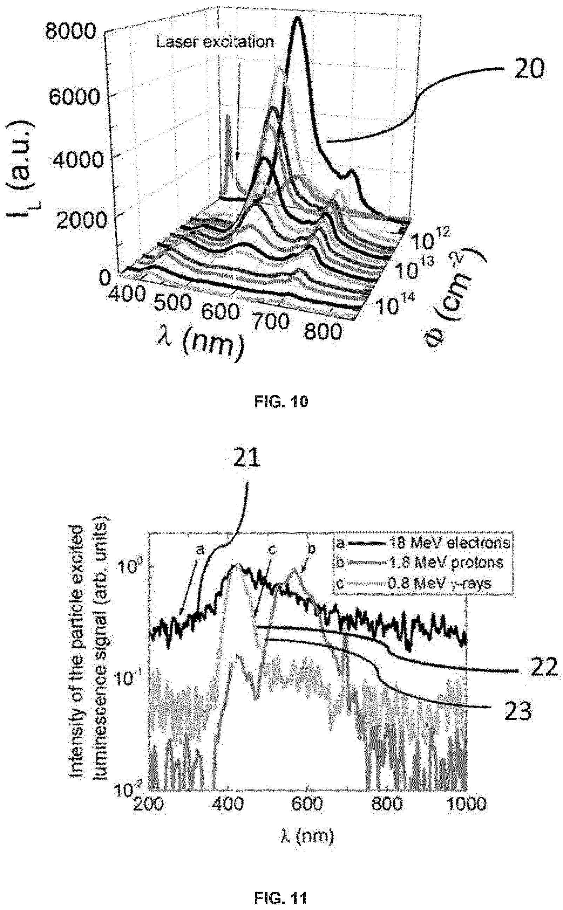

- **Fig. 10**.: The surface of the irradiated scintillator is excited by a probe UV laser, and the intensity of the laser-induced photo-luminescence (PL) is controlled. The luminescence light is collected through a multi-bundle fiberscope into a spectrophotometer and the dispersed PL spectrum is recorded. The dose is evaluated by using calibrated evolution (20) of the luminescence intensity within various PL spectral bands dependent on irradiation fluence.
- **Fig. 11.**: The type of impinging radiation can be estimated using the spectrum structure within ultraviolet (UV) (21), blue (22), and green-yellow (23) PL spectral ranges, recorded on the same GaN scintillator.

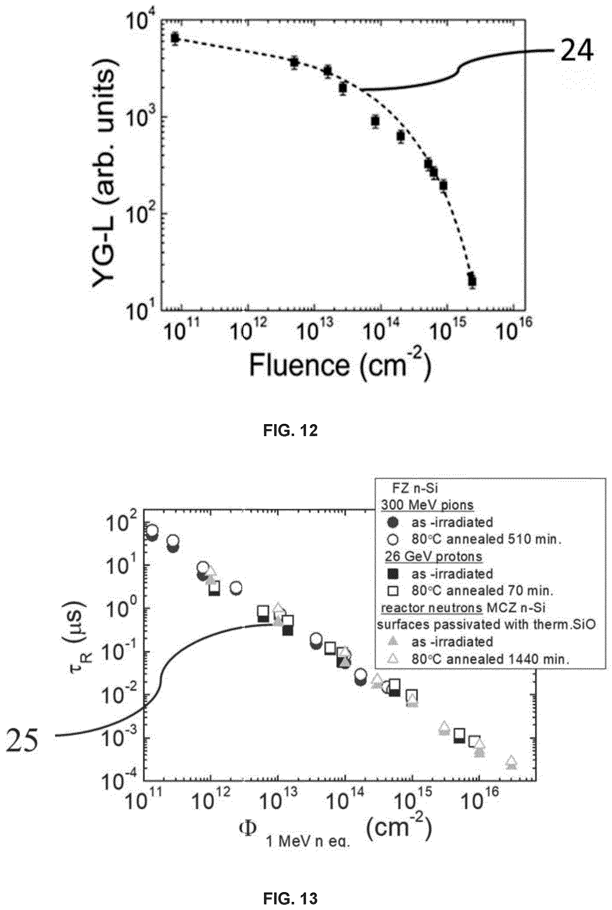

- **Fig. 12.**: The dynamic range of dose variations (24) covers more than three orders of magnitude within the PL intensity variations over the green-yellow (23) PL spectral range.
- **Fig. 13.**: Carrier recombination lifetime (25) in the high-purity Si as a function of the hadron (pion, proton, and reactor neutron) fluence is calibrated to material damage by 1 MeV neutrons; the calibrated *τ*- fluence characteristics measured in high-purity Si detector/sensor layer are employed to extract fluence/dose values.

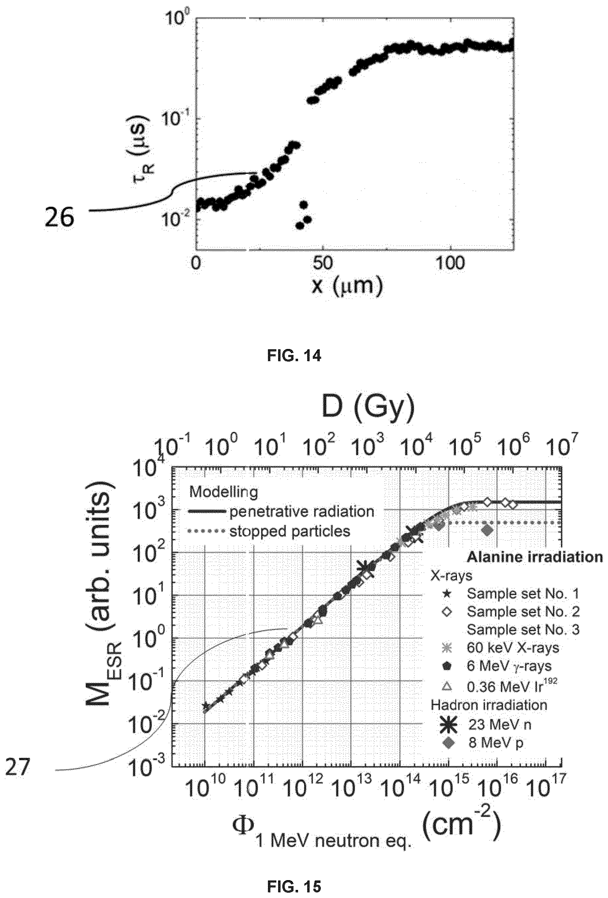

- **Fig. 14.**: The carrier-recombination-lifetime depth-distribution profile (26) obtained in the high-purity Si layer after a rather low-energy hadron irradiation can be employed for evaluation of the stopping range when reading one of the oriented sensor (1*) within the enhanced precision cell arrangement (Fig. 5) of the oriented dosimetry detector/sensor;
- **Fig.15.**: The alanine ESR (EPR) response peak-to-peak amplitude variations are independent on the irradiation type (27). Nevertheless, the calibrated EPR response depends only on irradiation dose or fluence (for hadrons, calibration is made relative to the 1MeV neutron equivalent). Thereby, these characteristics are applicable for the evaluation of the averaged dose.

### DETAILED DESCRIPTION OF INVENTION

The present invention relates **to layered combinations in a single oriented dosimetry sensor (1)** of the microwave-probed photo-sensors made of **high-purity large-resistivity semiconductor** homogeneous bulk-plate (4) pasted to the **intermediate organic material (alanine) layer (3), where free radicals emerge under high energy irradiations,** which is agglutinated further with a **thin top layer** (2) **of a GaN scintillator (****Fig. 1****).** The accumulated dose and its depth distribution (sketched in Fig. 1) within layers depends on the orientation of the triplex sensor. The measured dose value also depends on the response type: variation of the microwave-probed photoconductivity in large-resistivity semiconductor depth scan layer (4), of microwave EPR resonance amplitude in the intermediate organic material layer comprising alanine (3), and photoluminescence spectral amplitude in GaN scintillator (2), respectively. The signals averaged over the alanine layer (3) volume and collected from the scintillator (2) near-surface range are recorded. The top scintillator layer (2) is designed according to absorption depth in the optical spectral range of the luminescence radiation which is addressed to generate a scintillation spectrum inherent for definite radiation dose. This top scintillator layer (2) generates a combination of spectral shapes **(****Figs. 10, 11****),** characteristic for different particle radiations when this direction (over layers from 2 to 4) oriented triplex sensor (1) operates in particle species identification regime thereby acting as the spectral shape discriminator. The intensity of the UV laser-induced luminescence generated by the top scintillator layer (2) is calibrated according to dose-dependent intensity characteristics within different spectral bands, for instance, green-yellow PL **(****Figs. 10****,** **12****)** intensity dependent on the collected fluence of high-energy particles (for instance, protons). The integrated spectral area and spectrum shape serve for comparison of the scintillator signals ascribed to different impinging particles when luminescence responses are exploited for spectral shape discrimination, using the triplex sensor either in particle identification regime or for fast estimation of the radiation source (location, dose range as well as dose-rate) when the oriented triplex sensor (1, 16) is installed on the drone **(****Fig. 8****).** The intermediate organic material (alanine) layer (3) is addressed to evaluate the integral irradiation dose independent of the high energy irradiation type. The thickness of this (3) layer is chosen to conform to the EPR reader arrangement, the triplex sensor size, the dose range of recorded particles, and the penetration of intrusive radiations. The thickness of this (3) layer also serves for the reduction of the mutual exitation of the scanner (IR excitation in MW-PC, microwaves 10 GHz for EPR and 20 GHz in MW-PC, visible spectrum scintillation) radiations. The third element (layer) of the oriented triplex sensor (1), being the high-purity large-resistivity semiconductor (for instance, Si) homogeneous bulk-plate (4), serves for scanning the depth distribution of the parameters of carrier recombination or trapping lifetime. The thickness of the high-purity semiconductor plate (layer) (4) is chosen according to the predicted penetration depth of the particles under inspection. The mentioned layers of the triplex sensor (1) are electrically isolated by a sapphire substrate of GaN scintillator (2) and the silicon dioxide in large-resistivity silicon photo-sensor (4). These layers - the scintillator (2), the EPR dosimeter (3), and photo-sensor (4) - are mutually separated by the adhesive layers. The material of these adhesive layers should be irresponsive to microwave (10 and 20 GHz) and electromagnetic field impact, like the high-purity paraffin wax.

The present **oriented dosimetry sensor (ODS)** made as a **triplex oriented sensor** has preferences relative to a personal directionless dosimeter, described in patent applications US5132543A and CN102590850A**,** due to different material and layer thickness structure in the multi-layered ODS the dose depth distribution enables control of the radiation source orientation and location, especially, when using combined ODS devices, sketched in **Figs. 5** - **7****.**

The **ODS detectors (ODSD)** also have preferences relative to multi-sensor dosimetry devices, such as presented in EP21165145.0 patent application and RADMON detectors (published in articles [5, 6]), used as CERN CMS standard Gas Electron Multiplier (GMS) detectors for large fluence dosimetry, where Field Effect Transistor (FET), as well as PIN diode sensors, are combined, due to spatial alignment of three different material sensors in **triplex oriented sensors** those control **ODSD** depth and orientation dependent dose values and through enhancement of reliability of the dosimetry owing to different sensor reading techniques. Additionally, the **ODSD** are contactless sensors while fabrication of junction-containing GMS detectors **(GMSD)** increases complexity in GMSD manufacturing, in GMSD signal processing concerning radiation damage, and due to the impact of electrical noises.

The **ODSD** has an advantage relative to X-ray inspection of triplex metal layers method described in RU2285236C1 patent as ODSD is directly addressed to dose profiling intended to oriented dosimetry, despite the similarity of triplex reading technique in RU2285236C1 being far from dosimetry tasks.

The **2D and 3D ODSD** are similar to the dual sensors [7, 8] integrated into drones for the detection of neutrons and gamma photons however **ODSD** has preferences relative to dual sensors, as ODSD covers a significantly wider dose range, **ODSD** is more sensitive and fast response dosimeter, and **ODSD** is suitable for inspection of large hazardous areas, by scanning lateral location, direction, and distance from the dangerous radiation sources.

The **ODSD devices** have advantages relative to Phoswich detectors:
- **ODSD** operates considerably faster, as it simultaneously records strong/intensive hits of the examined radiations, where reliable results can be obtained even from a single pulse of the **ODSD** reader measured, while PSD/SSD discriminator should collect data over a day/hours to get a reliable record;
- As a consequence, **ODSD** can be applied for controlling the instantaneous state of irradiation;
- There is no physical limitation of the **ODSD** signal amplitude while saturation of PMT limits the density and energy of the impinging particles when using PSD/PSS discriminators - implemented as Phoswich detectors;

The present **ODSD** also has advantages against **Hybrid pixel (HPD) and GMSD devices:**
- fabrication of the **ODSD** enables avoiding the intricate and expensive technological procedures involved within the formation of HPD and GSMD;
- **ODSD** enables contactless reading of the detector responses by reducing the impact of electrical noises;
- **ODSD** is a significantly cheaper device relatively HPD and GMSD, and thereby suitable for mass-production and application in dosimetry monitoring of large areas;
- **ODSD** does not require an external (neither low nor high) voltage source (power supply) for its operation;
- **ODSD** has more signatures (the simultaneously measured stopping range or pair density distribution profile together with the fluence-dependent structure of luminescence spectrum or relative spectrum integrated areas ascribed to different species of incident particles) in discrimination of incident particle species.

The **ODSD** reading is performed in three steps. The first step is implemented using measurements of the spectral components of the UV laser-induced luminescence of the irradiated scintillator layer (collected into spectrophotometer using multi-bundle-fiberscope **Fig. 2**). The second step of the **ODSD** reading is carried out by the EPR scanner, where triplex **ODSD** is mounted within EPR insert containing an Mn⁺⁺ reference **(****Fig. 3**). The third step is performed by reading the triplex **ODSD** dosimetry data using carrier recombination lifetime dependence on irradiation fluence. The carrier recombination lifetime is recorded by an MW-PC transient scanner combined with an MW-PC τ-meter containing an additional IR pulsed laser **(****Fig. 4****).** To enhance the precision of a single **oriented dosimetry detector** or for monitoring the spatial location of the intensive radiation source, several **ODSD's** can be installed within a tube by stretching those face-to-face **(****Fig. 5****),** or these **ODSD's** can compose a 2D- **(****Fig. 6****)** or 3D- **(****Fig. 7****)** remote scanner of the space location and activity of radiation source. The latter 3D **ODSD** can be installed on a drone together with a LIDAR distance measurement instrument and compact reader of scintillator for the fast inspection of the harsh irradiated terrene surface, as sketched in **Fig. 8****.** The oriented dosimetry detector/sensor is a compact and cheap item **(****Fig. 9****)** which is suitable for easy installation/dismantlement within a set of dosimetry reading procedures. Then the irradiated sensor is in succession set into the PL as well as MW-PC opening and into the EPR insert of the tentative reader, as illustrated in **Fig. 9****.** The input of the **ODSD** can be pointed either to the scintillator or MW-PC sensor (as sketched in **Fig. 5**) layer. The scan of dose depth distribution within each ODSD is carried out by dosimeter reading procedures within 3 steps, sketched in **Figs. 2-4****.** The dose accumulated within the scintillator layer is extracted by analysis of calibrated PL intensity values, dependent on irradiation fluence **(****Fig. 10****).** This spectrum is additionally examined to estimate the origin of the impinging radiation **(****Fig. 11****),** and the peak intensity ascribed to a definite spectral band (for instance, green-yellow PL) is then measured to evaluate the accumulated fluence **(****Fig. 12****).** Further, the depth variations of carrier recombination lifetimes **(****Figs. 13****,** **14****)** within a high-purity Si material layer are scanned (using instrumentation, sketched in **Fig. 4**) by recording microwave-probed photoconductivity transients. Values of carrier lifetime are extracted by measuring the microwave signals recorded by a needle-tip edge probe where the infra-red laser light pulses are employed for photo-conductivity excitation. Finally, the calibrated (to Mn⁺⁺ reference) values of the EPR amplitude are recorded within the alanine layer by the EPR scanner, sketched in **Figs. 3** **and** **9****.** The calibrated characteristic **(****Fig. 15****)** of the ESR (EPR) response peak-to-peak amplitude dependent on irradiation fluence/dose is then employed to extract alanine layer volume averaged dose values. Orientation of the radiation source relative to ODSD is determined by analysis of dose value distribution either among layers of the ODSD or a set of ODSDs deployed within the **1D cell,** i.e. combined line-ODSD detector/sensor **(****Fig. 5****)** or planar **2D-ODSD** as well as spatial **3D-ODSD** arrangements. A gradient of the dose distribution along the ODSD layers (or streamline of the **1D cell**) determines a direction pointed to the irradiation source. The instantaneous average dose is extracted from the EPR response data combined with distance-meter (for instance, LIDAR type) towards the determined direction, while the dose rate of the radiation source is evaluated by analysing time-varying responses of the scintillator, equipped with LIDAR/GPS position/distance measuring instruments.

### Principles of evaluation of dose/fluence of irradiations as well as for the discrimination of the impinging particles, within the range of high doses and particle energies:

**The large fluence (dose) hadron** irradiation introduces a rather high density of radiation defects, the concentration of which is proportional to the collected fluence. It is known that all the elementary hadrons, such as neutrons, protons, and pions, with an energy of > 10 MeV introduce the single type of radiation defects that modify the carrier lifetime being a reciprocal hyperbolic function (25) of hadron fluence **(****Fig. 13****),** irrespective of incident hadron species and growth technology (Cz, MCZ, FZ) of high-purity Si wafer pieces. The single exponential decay transients are routinely recorded in the as-irradiated high-purity Si materials, due to the prevailing the bulk recombination process.

**Necessity of depth scans of parameter distribution.** The recombination lifetime slightly depends on irradiation particle energy (26) as illustrated in **Fig. 14****.** To elevate the precision of particle identification and dose/fluence measurements, the depth-scanning of carrier lifetime is anticipated within ODSD readers **(****Fig. 9****).** The profile of carrier recombination lifetime (26), as illustrated in **Fig. 14****,** enables evaluation of the incident particle stopping range, when by comparing it with an SRIM (stopping and range of ions in the matter) software simulated profile, the energy of impinging radiation can be determined.

**Separation of the radiation type.** The luminescence spectra of the GaN scintillator depend on the fluence of the hadron irradiations **(****Figs. 10** **and** **12****),** and this dependence, ascribed to different spectral ranges **(****Fig. 11****),** can be employed for dosimetry of heavily absorbed particles (alpha-particles, low energy protons, and gamma photons). The dose-dependent luminescence intensity variations (24, **Fig. 12**), ascribed to different spectral bands (21-23, **Fig. 11**), serve as calibrated characteristics for dose extraction.

### NON-PATENT LITERATURE

**1** S.Yamamoto and J.Hatazawa. Development of an alpha/beta/gamma detector for radiation monitoring, Review of Scientific Instruments 82, 113503 (2011); https://doi.org/10.1063/1.3658821.
**2** A.Förster, et al. Transforming X-ray detection with hybrid photon counting detectors, Published 2019 Medicine, Physics Philosophical transactions. Series A, Mathematical, physical, and engineering sciences, https://doi.org/10.1098/rsta.2018.0241.
**3** A. Rahimi et al. Radiation-Hard Optical Hybrid Board for the ATLAS Pixel Detector, International Journal of Modern Physics A Vol. 20, No. 16 (30 June 2005) 3805-3807, https://doi.org/10.1142/S0217751X05027679.
**4** J. H. Jungmann-Smith et al. Radiation hardness assessment of the charge-integrating hybrid pixel detector JUNGFRAU 1.0 for photon science. Review of Scientific Instruments 86, 123110 (2015); https://dx.doi.org/10.1063/1.4938166\
**5** F. Ravotti et al. Radiation monitoring in mixed environments at CERN: from the IRRAD6 facility to the LHC experiments. 2007, 1170-1177. https://ro.uow.edu.au/engpapers/3296
**6** L.Dimitrov, P.laydjiev, G. Mitev, I.Vankov. Radiation monitoring of the GEM muon detectors at CMS. Physics of Particles and Nuclei Letters, 13, 551-556 (2016). https://doi.org/10.1134/S1547477116050174
**7** A.Barzilov, J.Hartman, I.Novikov. Remote sensing of neutron and gamma radiation using aerial unmanned autonomous system. https://digitalscholarship.unlv.edu/qpsa forum/1 (2016).
**8** A.Barzilov and M. Kazemeini. Dual mode radiation sensor for UAS platforms. Proceedings 2019, 2019. www.mdpi.com/journal/proceedings

## Claims

1. An oriented triplex hybrid dosimetry sensor for identifying the type of incident radiation and location of the radiation source by contactless measuring of high-energy irradiation fluence *Φ*, wherein the sensor (1) comprises at least:
• a first top layer (2) as a scintillator layer (2) wherein spectral variations of scintillations are dependent on the fluence of the incident radiation, as well as particle species, and lateral dimensions of this layer do not exceed the whole width of the sensor;
• a second layer (3) as an intermediate organic material layer (3) for providing an electron paramagnetic resonance (EPR) signal integrated over volume scans, made of organic material where free-radicals are formed under irradiation of high-energy particles, and concentration of radiation-induced free radicals is dependent on the irradiation dose;
• a third layer (4) as a photo- conductivity depth-scan layer (4) for scanning the depth distribution of the parameters of carrier recombination or trapping lifetime dependent on the irradiation fluence, and particle species as well as energy, and the lateral dimensions of this sensor do not exceed the whole width of the sensor (1);
wherein
• the sensor layers (2, 3, 4) are agglutinated using materials which are insensitive to the electromagnetic fields involved in registering of the electron paramagnetic resonance and microwave signals; and
• the second layer (3) acts also as a spectral filter preventing excitation of the scintillator layer (2) as well as the third layer (4),
wherein
the scintillator layer **(2),** the second layer **(3),** and the third layer **(4)** of the triplex sensor are suitable for sequential scanning by at least three external apparatuses - the fiber-coupled spectrophotometer, the electron paramagnetic resonance scanner, and the microwave needle-tip antenna connected to a microwave detection system, where particle species/ energy discrimination and fluence measurements are performed by correlating signals of a scintillator spectrum structure, an electron paramagnetic resonance signal amplitude and a microwave-probed photoconductivity decay lifetime, and wherein the scintillator layer (2), the second layer (3) and the third layer (4) act as complementary sensors of the radiation fluence while a gradient of the dose distribution along the sensor layers (2, 3, 4) determines the sensors (1) orientation with respect to the source of the irradiation fluence *Φ*.

2. The sensor (1) according to claim 1, wherein
- the thickness of the scintillator layer (2) is adjusted to fit the luminescence self-absorption depth;
- the thickness of the electron paramagnetic resonance layer (3) is adjusted to the sensitivity range of the registered irradiation doses and geometrical dimensions of the reader inserts (8) within employed electron paramagnetic resonance scanner (9), and
- the thickness of the photoconductivity depth-scan layer (4) is adjusted to fit the penetration depth or stopping range of the incident radiation.

3. The sensor (1) according to claims 1 and 2, wherein
- the scintillator layer (2) comprises a wide band-gap semiconductor, preferably, GaN or diamond,
- the electron paramagnetic resonance sensor layer (3) is made of alanine or sucrose,
- the depth-scan layer (4) comprises a narrow band-gap, high-purity and large-resistivity semiconductor, preferably, high-purity silicon.

4. The sensor (1) according to claims 1 to 3, wherein the three sensor layers (2), (3) and (4) are agglutinated using high-purity paraffin-wax type materials which are insensitive to the electromagnetic fields involved in registering of the electron paramagnetic resonance and microwave signals.

5. The sensor (1) according to claims 1 to 4, wherein it is applicable for detection and measurements of the incident high-energy irradiation fluence, the irradiation comprising any of X-rays, gamma-rays, electrons, positrons, pions, neutrons, protons, alfa-particles.

6. An oriented dosimetry arrangement of sensors (1) according to claims 1 to 5, wherein said sensors (1) are composed into 1D-cell structures comprising triplex sensors (1) paired face-to-face where the first layers (2) in the sensors' pair are faced, or/and several triplex sensors (1) arranged into a 1D-line, and depth scanning of these 1D-structures after the irradiation is applicable for estimation of location of the radiation source.

7. An oriented dosimetry arrangement of sensors (1) according to claims 1 to 5, or 1D-structures according to claim 6, wherein the triplex sensors (1) or 1D-structures, being oriented in perpendicular directions, comprise 2D- or 3D-sensors which are applicable for contactless and fast mapping of the radiation hazard large areas.

8. A dosimetry system comprising any of the sensor (1) of claims 1 to 5, or/and arrangements of claims 6-7, wherein the system further comprises any of the following measurement devices:
• microwave-probed-photoconductivity-*τ* meter;
• electron paramagnetic resonance scanner;
• additional Infrared Pulse IR laser source;
• additional Ultraviolet Pulse UV laser source;
• fiberscope with multiple-fibers;
• spectrophotometer;
• microwave dc-amplitude discriminator or array of microwave dc-amplitude discriminators;
• digital signal processing equipment.

9. A measurement method of high-energy radiation dosimetry, using the system of claim 8, **characterized by** the following steps:
• exposing the oriented triplex sensor (1) to the high-energy irradiation fluence ***Φ***, thereby accumulating an irradiation dose during an exposure period; and subsequently,
• the dosimetry signals of the sensor's three layers (2, 3, 4) are consequently recorded by
∘ measuring spectral components of the UV laser (5)-induced luminescence of the irradiated scintillator layer (2) by the spectrophotometer (7) with multi-bundle-fiberscope (6), to determine the dose value,
∘ recording the microwave-probed photo-conductivity transients of the irradiated third layer (4) by microwave-probed-photoconductivity scanner (11) combined with microwave-probed-photoconductivity-*τ*-meter (12) containing additional IR pulsed laser (10), to obtain fluence-dependent carrier-lifetime depth-profiles within the third layer (4);
∘ reading the electron paramagnetic resonance signal from the sensor's (1) second layer (3) by the electron paramagnetic resonance scanner (9) insert (8) containing a Mn⁺⁺ reference, to determine the layer (3) volume-averaged irradiation dose,
• subsequently, the incident radiation particle species, energy, and the fluence are evaluated by the comparative analysis of the measured electron paramagnetic resonance signal amplitudes in the second layer (3), carrier-lifetime profiles in the third layer (4) and scintillation intensity in the first layer (2), relative to their calibrated characteristics,
• wherein the dose-gradient from the first (2) to third layer (4) is estimated to determine the orientation of the exposed sensor (1) with respect to the irradiation source creating fluence ***Φ*.**

10. The system of claim 8, further comprising at least one unmanned aerial vehicle UAV, wherein the triplex sensor (1), or sensors, or arrangements thereof are installed on said UAV, being complemented at least with
• LIDAR type distance-meter,
• the multi-bundle fiberscope,
• spectrophotometer, and
• digital data collection and transfer module,
where said UAV is applicable for fast inspection of the harsh-irradiated terrene surface, wherein the fast signal reading is performed on-board of the UAV, using the sensor's (1) scintillator layer (2), while the precise dosimetry is implemented after the UAV landing by measurements of the second and third layer signals.

## Patentansprüche

1. Ausgerichteter hybrider Triplex-Dosimetrie-Sensor zum Identifizieren der Art von einfallender Strahlung und des Ortes der Strahlungsquelle durch kontaktloses Messen der Fluenz ***Φ*** hochenergetischer Strahlung, wobei der Sensor (1) mindestens das Folgende umfasst:
• eine erste obere Schicht (2) als Szintillatorschicht (2), wobei spektrale Verläufe der Szintillationen von der Fluenz der einfallenden Strahlung sowie Teilchenarten abhängig sind, und seitliche Dimensionen dieser Schicht die gesamte Breite des Sensors nicht überschreiten;
• eine zweite Schicht (3) als eine Zwischenschicht (3) aus organischem Material zum Bereitstellen eines Elektronenspinresonanz(EPR)-Signals, das über Volumenscans integriert wird, bestehend aus organischem Material, bei dem freie Radikale unter Bestrahlung mit hochenergetischen Teilchen gebildet werden, und wobei die Konzentration von strahlungsinduzierten freien Radikalen von der Strahlungsdosis abhängig ist;
• eine dritte Schicht (4) als eine Tiefenscanschicht (4) mit Photoleitfähigkeit zum Scannen der Tiefenverteilung der Parameter der Trägerrekombination oder Einfangdauer in Abhängigkeit von der Strahlungsfluenz und Teilchenarten sowie der Energie, wobei die seitlichen Dimensionen dieses Sensors die gesamte Breite des Sensors (1) nicht überschreiten;
wobei
• die Sensorschichten (2, 3, 4) unter Verwendung von Materialien agglutiniert werden, die für die elektromagnetischen Felder unempfindlich sind, die an der Aufzeichnung der Elektronenspinresonanz- und Mikrowellensignale beteiligt sind; und
• die zweite Schicht (3) auch als Spektralfilter wirkt, der die Erregung der Szintillatorschicht (2) sowie der dritten Schicht (4) verhindert,
wobei
die Szintillatorschicht **(2),** die zweite Schicht **(3)** und die dritte Schicht **(4)** des Triplex-Sensors zum sequentiellen Scannen durch mindestens drei externe Vorrichtungen, das fasergekoppelte Spektrophotometer, den Elektronenspinresonanzscanner und die Mikrowellen-Nadelspitzen-Antenne, die mit einem Mikrowellendetektionssystem gekoppelt sind, geeignet sind, wobei Teilchenarten-/Energiediskrimination und Fluenzmessungen durch Korrelieren von Signalen einer Szintillatorspektrumstruktur, einer Elektronenspinresonanz-Signalamplitude und einer mit Mikrowellen untersuchten Photoleitfähigkeitsabklingdauer durchgeführt werden, und wobei die Szintillatorschicht (2), die zweite Schicht (3) und die dritte Schicht (4) als komplementäre Sensoren der Strahlungsfluenz wirken, während ein Gradient der Dosisverteilung entlang der Sensorschichten (2, 3, 4) die Ausrichtung des Sensors (1) in Bezug auf die Quelle der Strahlungsfluenz ***Φ*** bestimmt.

2. Sensor (1) nach Anspruch 1, wobei
- die Dicke der Szintillatorschicht (2) derart eingestellt ist, dass sie mit der Lumineszenzselbstabsorptionstiefe übereinstimmt;
- die Dicke der Elektronenspinresonanzschicht (3) auf den Empfindlichkeitsbereich der aufgezeichneten Strahlungsdosen und geometrischen Dimensionen der Lesegeräteinsätze (8) innerhalb des eingesetzten Elektronenspinresonanzscanners (9) eingestellt ist, und
- die Dicke der Tiefenscanschicht (4) mit Photoleitfähigkeit derart eingestellt ist, dass sie mit der Eindringtiefe oder dem Stoppbereich der einfallenden Strahlung übereinstimmt.

3. Sensor (1) nach den Ansprüchen 1 und 2, wobei
- die Szintillatorschicht (2) einen Wide-Bandgap-Halbleiter, vorzugsweise GaN oder Diamant, umfasst,
- die Elektronenspinresonanzsensorschicht (3) aus Alanin oder Saccharose besteht,
- die Tiefenscanschicht (4) einen Narrow-Bandgap-Halbleiter mit hoher Reinheit und großer Widerstandsfähigkeit, vorzugsweise Silicium mit hoher Reinheit, umfasst.

4. Sensor (1) nach den Ansprüche 1 bis 3, wobei die drei Sensorschichten (2), (3) und (4) unter Verwendung von Paraffinwachs-artigen Materialien mit hoher Reinheit agglutiniert werden, die für die elektromagnetischen Felder unempfindlich sind, die an der Aufzeichnung der Elektronenspinresonanz- und Mikrowellensignale beteiligt sind.

5. Sensor (1) nach den Ansprüchen 1 bis 4, wobei er zur Detektion und Messung der Fluenz einfallender hochenergetischer Strahlung anwendbar ist, wobei die Strahlung beliebige von Röntgenstrahlen, Gammastrahlen, Elektronen, Positronen, Pionen, Neutronen, Protonen, alpha-Teilchen umfasst.

6. Anordnung von ausgerichteten Dosimetrie-Sensoren (1) nach den Ansprüchen 1 bis 5, wobei die Sensoren (1) zu 1D-Zellstrukturen zusammengefügt sind, die Triplexsensoren (1) umfassen, die einander gegenüber gepaart sind, wobei die ersten Schichten (2) in dem Sensorenpaar zugewandt sind, und/oder mehrere Triplexsensoren (1), die in einer 1D-Linie angeordnet sind, und wobei ein Tiefenscan dieser 1D-Strukturen nach der Bestrahlung zur Schätzung des Ortes der Strahlungsquelle anwendbar ist.

7. Anordnung von ausgerichteten Dosimetrie-Sensoren (1) nach den Ansprüchen 1 bis 5 oder 1D-Strukturen nach Anspruch 6, wobei die Triplexsensoren (1) oder 1D-Strukturen, die in senkrechten Richtungen ausgerichtet sind, 2D- oder 3D-Sensoren umfassen, die zum kontaktlosen und schnellen Zuordnen der großen Bereiche mit Strahlungsgefahr anwendbar sind.

8. Dosimetriesystem, umfassend einen beliebigen der Sensoren (1) nach den Ansprüchen 1 bis 5 und/oder Anordnungen nach den Ansprüchen 6-7, wobei das System ferner eine beliebige der folgenden Messvorrichtungen umfasst:
• einen *τ*-Messer der mit Mikrowellen untersuchten Photoleitfähigkeit;
• einen Elektronenspinresonanzscanner;
• eine zusätzliche Infrarot-gepulste IR-Laserquelle;
• eine zusätzliche Ultraviolett-gepulste UV-Laserquelle;
• ein Fiberskop mit mehreren Fasern;
• einen Spektrophotometer;
• einen Mikrowellen-DC-Amplituden-Diskriminator oder eine Anordnung von Mikrowellen-DC-Amplituden-Diskriminatoren;
• eine Verarbeitungsausrüstung für digitale Signale.

9. Messverfahren zur Dosimetrie hochenergetischer Strahlung unter Verwendung des Systems nach Anspruch 8, **gekennzeichnet durch** die folgenden Schritte:
• Aussetzen des ausgerichteten Triplexsensors (1) gegenüber der Fluenz ***Φ*** hochenergetischer Strahlung, wodurch eine Strahlungsdosis während eines Expositionszeitraums angesammelt wird; wobei anschließend
• die Dosimetriesignale der drei Schichten (2, 3, 4) des Sensors werden demzufolge folgendermaßen aufgezeichnet:
∘ Messen von Spektralkomponenten der durch den UV-Laser (5) induzierten Lumineszenz der bestrahlten Szintillatorschicht (2) durch den Spektrophotometer (7) mit einem Mehrfachbündel-Fiberskop (6), um den Dosiswert zu bestimmen,
∘ Protokollieren der Transienten der mit Mikrowellen untersuchten Photoleitfähigkeit der bestrahlten dritten Schicht (4) durch einen Scanner (11) der mit Mikrowellen untersuchten Photoleitfähigkeit, kombiniert mit dem *τ*-Messer (12) der mit Mikrowellen untersuchten Photoleitfähigkeit, der einen zusätzlichen IR-gepulsten Laser (10) enthält, um Fluenz-abhängige Träger-Dauer-Tiefenprofile innerhalb der dritten Schicht (4) zu erhalten;
∘ Lesen des Elektronenspinresonanzsignals aus der zweiten Schicht (3) des Sensors (1) durch den Einsatz (8) des Elektronenspinresonanzscanners (9), der eine Mn++-Referenz enthält, um die volumengemittelte Strahlungsdosis der Schicht (3) zu bestimmen,
• anschließend werden die Teilchenart, die Energie und die Fluenz der einfallenden Strahlung durch die Vergleichsanalyse der gemessenen Elektronenspinsignalamplituden in der zweiten Schicht (3), Träger-Dauer-Profile in der dritten Schicht (4) und der Szintillationsintensität in der ersten Schicht (2) relativ zu ihren kalibrierten Eigenschaften bewertet,
• wobei der Dosisgradient aus der ersten (2) bis dritten Schicht (4) geschätzt wird, um die Ausrichtung des freiliegenden Sensors (1) in Bezug auf die durch die Strahlungsquelle erzeugte Fluenz ***Φ*** zu bestimmen.

10. System nach Anspruch 8, ferner umfassend mindestens ein unbemanntes Luftfahrzeug, UAV, wobei der Triplexsensor (1) oder die -sensoren oder Anordnungen davon an dem UAV installiert sind, die mit mindestens einem von Folgendem ergänzt sind:
• einem Abstandsmesser vom LIDAR-Typ,
• dem Mehrfachbündel-Fiberskop,
• einem Spektrophotometer und
• einem Modul zum Erfassen und Übertragen digitaler Daten,
wobei das UAV zur schnellen Überprüfung der stark bestrahlten Erdoberfläche anwendbar ist, wobei der schnelle Signallesevorgang an Bord des UAV unter Verwendung der Szintillatorschicht (2) des Sensors (1) durchgeführt wird, während die genaue Dosimetrie durch Messungen der Signale der zweiten und dritten Schicht umgesetzt wird, nachdem das UAV gelandet ist.

## Revendications

1. Capteur de dosimétrie hybride triplex orienté pour identifier le type de rayonnement incident et la localisation de la source de rayonnement par mesure sans contact de la fluence d'irradiation à haute énergie ***Φ***, dans lequel le capteur (1) comprend au moins :
• une première couche supérieure (2) en tant que couche de scintillateur (2) dans laquelle les variations spectrales des scintillations dépendent de la fluence du rayonnement incident, ainsi que des espèces de particules, et les dimensions latérales de cette couche ne dépassent pas la largeur totale du capteur ;
• une deuxième couche (3) en tant que couche intermédiaire de matériau organique (3) pour fournir un signal de résonance paramagnétique électronique (EPR) intégré sur des balayages de volume, constituée d'un matériau organique où des radicaux libres se forment sous l'irradiation de particules à haute énergie, et la concentration de radicaux libres induits par le rayonnement dépend de la dose d'irradiation ;
• une troisième couche (4) comme couche de photoconductivité à balayage en profondeur (4) pour balayer la distribution en profondeur des paramètres de recombinaison des porteurs ou de durée de vie de piégeage en fonction de la fluence d'irradiation, des espèces de particules ainsi que de l'énergie, et les dimensions latérales de ce capteur ne dépassent pas la largeur totale du capteur (1) ;
dans lequel
• les couches de capteurs (2, 3, 4) sont agglutinées à l'aide de matériaux insensibles aux champs électromagnétiques impliqués dans l'enregistrement de la résonance paramagnétique électronique et des signaux micro-ondes ; et
• la deuxième couche (3) agit également comme un filtre spectral empêchant l'excitation de la couche de scintillateur (2) ainsi que de la troisième couche (4),
dans lequel
la couche de scintillateur **(2),** la deuxième couche **(3)** et la troisième couche **(4)** du capteur triplex sont adaptées au balayage séquentiel par au moins trois appareils externes - le spectrophotomètre à fibre couplée, le scanner à résonance paramagnétique électronique, et l'antenne à pointe d'aiguille à micro-ondes connectées à un système de détection à micro-ondes, où la discrimination des espèces de particules/énergie et les mesures de fluence sont effectuées en corrélant des signaux d'une structure de spectre de scintillateur, une amplitude de signal de résonance paramagnétique électronique et une durée de vie de décroissance de photoconductivité sondée par micro-ondes, et dans lequel la couche de scintillateur (2), la deuxième couche (3) et la troisième couche (4) agissent comme des capteurs complémentaires de fluence de rayonnement tandis qu'un gradient de la distribution de dose le long des couches de capteur (2, 3, 4) détermine l'orientation du capteur (1) par rapport à la source de la fluence d'irradiation ***Φ***.

2. Capteur (1) selon la revendication 1, dans lequel
- l'épaisseur de la couche de scintillateur (2) est ajustée pour s'adapter à la profondeur d'auto-absorption de la luminescence ;
- l'épaisseur de la couche de résonance paramagnétique électronique (3) est ajustée à la plage de sensibilité des doses d'irradiation enregistrées et aux dimensions géométriques des inserts de lecteur (8) dans le scanner à résonance paramagnétique électronique (9) utilisé, et
- l'épaisseur de la couche de balayage de profondeur de photoconductivité (4) est ajustée pour s'adapter à la profondeur de pénétration ou à la plage d'arrêt du rayonnement incident.

3. Capteur (1) selon les revendications 1 et 2, dans lequel
- la couche de scintillateur (2) comprend un semi-conducteur à large bande interdite, de préférence du GaN ou du diamant,
- la couche du capteur de résonance paramagnétique électronique (3) est constituée d'alanine ou de saccharose,
- la couche de balayage en profondeur (4) comprend un semi-conducteur à bande interdite étroite, de haute pureté et de grande résistivité, de préférence du silicium de haute pureté.

4. Capteur (1) selon les revendications 1 à 3, dans lequel les trois couches de capteur (2), (3) et (4) sont agglutinées à l'aide de matériaux de type paraffine de haute pureté qui sont insensibles aux champs électromagnétiques impliqués dans l'enregistrement de la résonance paramagnétique électronique et des signaux micro-ondes.

5. Capteur (1) selon les revendications 1 à 4, dans lequel il est applicable à la détection et aux mesures de la fluence d'irradiation à haute énergie incident, l'irradiation comprenant l'un quelconque des rayons X, des rayons gamma, des électrons, des positons, des pions, des neutrons, des protons, des particules alpha.

6. Agencement de dosimétrie orientée de capteurs (1) selon les revendications 1 à 5, dans lequel lesdits capteurs (1) sont composés de structures cellulaires 1D comprenant des capteurs triplex (1) appariés face à face où les premières couches (2) de la paire de capteurs font face, ou/et plusieurs capteurs triplex (1) disposés en ligne 1D, et le balayage en profondeur de ces structures 1D après l'irradiation est applicable pour estimer l'emplacement de la source de rayonnement.

7. Agencement de dosimétrie orientée de capteurs (1) selon les revendications 1 à 5, ou de structures 1D selon la revendication 6, dans lequel les capteurs triplex (1) ou les structures 1D, étant orientés dans des directions perpendiculaires, comprennent des capteurs 2D ou 3D qui sont applicables pour une cartographie sans contact et rapide des grandes zones à risque de rayonnement.

8. Système de dosimétrie comprenant l'un quelconque des capteurs (1) selon les revendications 1 à 5, ou/et des agencements selon les revendications 6 à 7, dans lequel le système comprend en outre l'un quelconque des dispositifs de mesure suivants :
• un compteur de photoconductivité à sonde micro-ondes *τ* ;
• un scanner à résonance paramagnétique électronique ;
• une source laser IR à impulsion infrarouge supplémentaire ;
• une source laser UV à impulsion ultraviolette supplémentaire ;
• un fibroscope à fibres multiples ;
• un spectrophotomètre ;
• un discriminateur d'amplitude continue à micro-ondes ou un réseau de discriminateurs d'amplitude continue à micro-ondes ;
• un équipement de traitement de signal numérique.

9. Procédé de mesure de dosimétrie de rayonnement à haute énergie, utilisant le système selon la revendication 8, **caractérisé par** les étapes suivantes :
• l'exposition du capteur triplex orienté (1) à la fluence d'irradiation à haute énergie ***Φ***, accumulant ainsi une dose d'irradiation pendant une période d'exposition ; et ensuite,
• les signaux de dosimétrie des trois couches du capteur (2, 3, 4) sont par conséquent enregistrés par
∘ la mesure des composantes spectrales de la luminescence induite par le laser UV (5) de la couche de scintillateur irradiée (2) par le spectrophotomètre (7) avec fibroscope multifaisceaux (6), pour déterminer la valeur de dose,
∘ l'enregistrement des transitoires de photoconductivité sondées par micro-ondes de la troisième couche irradiée (4) par un scanner de photoconductivité sondé par micro-ondes (11) combiné à un compteur de photoconductivité à sonde micro-ondes τ (12) contenant un laser pulsé IR supplémentaire (10), pour obtenir des profils de profondeur de durée de vie des porteurs dépendants de la fluence dans la troisième couche (4) ;
∘ la lecture du signal de résonance paramagnétique électronique de la deuxième couche (3) du capteur (1) par l'insert (8) du scanner à résonance paramagnétique électronique (9) contenant une référence Mn++, pour déterminer la dose d'irradiation moyenne en volume de la couche (3),
• ensuite, les espèces de particules de rayonnement incident, l'énergie et la fluence sont évaluées par l'analyse comparative des amplitudes mesurées du signal de résonance paramagnétique électronique dans la deuxième couche (3), des profils de durée de vie des porteurs dans la troisième couche (4) et de l'intensité de scintillation dans la première couche (2), par rapport à leurs caractéristiques calibrées,
• dans lequel le gradient de dose de la première (2) à la troisième couche (4) est estimé pour déterminer l'orientation du capteur exposé (1) par rapport à la source d'irradiation créant la fluence *Φ*.

10. Système selon la revendication 8, comprenant en outre au moins un véhicule aérien sans pilote, UAV, dans lequel le capteur triplex (1), ou les capteurs, ou leurs agencements sont installés sur ledit UAV, étant complétés au moins par
• un distancemètre de type LIDAR,
• le fibroscope multifaisceaux,
• un spectrophotomètre, et
• un module de collecte et de transfert de données numériques,
où ledit UAV est applicable pour une inspection rapide de la surface terrestre fortement irradiée, dans lequel la lecture rapide du signal est effectuée à bord de l'UAV, en utilisant la couche de scintillateur (2) du capteur (1), tandis que la dosimétrie précise est mise en œuvre après l'atterrissage de l'UAV par des mesures des signaux de deuxième et troisième couche.
